# EUROPEAN PATENT APPLICATION

(11) **EP 2 071 962 A1**
(43) Date of publication of application: **24.06.2009**
(21) Application number: 07123795.2
(22) Date of filing: 20.12.2007
(51) Int. Cl.: A23G 3/34, A21D 13/00

(54) **Glaze composition for parbaked farinaceous products**

(71) Applicant: CSM Nederland B.V., 1112 XE Diemen (NL)
(72) Inventor: Brill-Neumann, Ines, D-28215 Bremen (DE); Hentschel, Michael, D-27749 Delmenhorst (DE)
(74) Representative: Swinkels, Bart Willem

(57) **Abstract**

The invention relates to a parbaked farinaceous product that is at least partly coated with a glaze composition, said glaze composition comprising at least 20 wt.% of fat, wherein said fat is characterised by the following fatty acid composition:
• saturated C₈-C₁₄ fatty acids between 50 wt.% and 80 wt.%;
• saturated C₁₆-C₁₈ fatty acids between 10 wt.% and 35 wt.%;
• total saturated fatty acids between 70 wt.% and 100 wt.%;
and the following solid fat profile:

The glazing composition is stable under the oven conditions employed during bake-off and has excellent eating quality.

The invention also provides a process preparing the aforementioned parbaked product and to a method of preparing a fully baked farinaceous product by baking off a that same parbaked product.

## Description

### TECHNICAL FIELD OF THE INVENTION

The present invention relates to a glaze composition that is specifically designed for application onto parbaked farinaceous products. Parbaked farinaceous products that have been coated with the present glaze composition can be baked off without problems, such as dripping, formation of blisters, or burning. After bake-off, the glaze on the fully baked product so obtained has excellent texture and mouth feel.

### BACKGROUND OF THE INVENTION

Bakery products that are made from dough are generally most appetising immediately after they have been baked in an oven. Freshly baked products have a very appealing aroma. Furthermore, also texture and moistness are usually optimal in freshly baked bakery products. Unfortunately, during storage these desirable product properties of freshly baked products disappear very quickly.

The on-demand provision of freshly-baked baked farinaceous products in adequate quantities presents a major challenge to bakeries, retailers, restaurants etc. In order to deal with this challenge partially baked (parbaked) products have been developed that can be "baked-off" within a few minutes to yield a fully baked product that is indistinguishable from a freshly baked product.

In case of baked products carrying a glaze, parbaking unfortunately does not enable on-demand provision of freshly baked products since after bake-off of the parbaked product the glaze still has to be applied. The application of the glaze can be time consuming, specially in case the product has to cool down before the glaze can be applied.

US 6,902,752 describes a coating material for confectionary/bakery use comprising 25-75 wt.% of sugar and at least 25 wt.% of oil and fat, wherein the solid fat content of the oil and fat is more than 45% at 20 °C and less than 15% at 35 °C. The examples describe the application of such a coating material to ring doughnuts, roll breads and cream puffs. The fat components used in the latter coating materials consisted of hardened palm kernel oil (SF at 20 °C = 78.6%; SFC at 35 °C = 3.8%) or a 1:4 blend of low melting palm oil (iodine value = 65) and the aforementioned hardened palm kernel oil.

### SUMMARY OF THE INVENTION

The present invention enables on-demand preparation of freshly baked, glazed bakery products. The inventors have developed a glazing composition that can suitably be applied onto a parbaked farinaceous product. The glazing composition is stable under the oven conditions employed during bake-off and has excellent eating quality. The glazing composition of the present invention contains at least 20 wt.% of fat, said fat being characterised by the following fatty acid composition:
- saturated C₈-C₁₄ fatty acids between 50 wt.% and 80 wt.%;
- saturated C₁₆-C₁₈ fatty acids between 10 wt.% and 35 wt.%;
- total saturated fatty acids between 70 wt.% and 100 wt.%;
   and the following solid fat profile:
- N₃₅ ≤ 25%;
- N₂₀ ≥ 60%;
- N₂₀-N₃₅ ≥ 55%.

Thus, one aspect of the present invention relates to a parbaked farinaceous product that is at least partly coated with the above defined glaze composition.

Another aspect of the invention concerns a method that comprises baking off a such a glazed parbaked farinaceous product.

Yet another aspect of the invention relates to the use of a glaze composition as defined above for coating a parbaked farinaceous product.

The glaze composition employed in accordance with the present invention is bakestable, i.e. it does not burn or form blisters. Furthermore, the present glaze composition offers the advantage that it does not become very thin (runny) during bake-off. Thus, the glaze composition will remain attached to the farinaceous product during and after bake-off (no dripping). Finally, the glaze composition of the present invention exhibits excellent texture and mouthfeel. At ambient temperature, the glaze is crispy whereas in the mouth it melts quickly. The advantageous properties of the present glaze composition are believed to be associated with the high level of saturated fatty acids contained therein and the high fraction of C₈-C₁₄ fatty acids therein. Suitable sources of C₈-C₁₄ fatty acids include lauric fats such as palmkernel oil and coconut oil.

The coating of unbaked farinaceous products has been described in US 2006/0040035. This US application describes a self icing bakery dough comprising:
- a ready-to-use bakery dough, and
- a bakeable icing applied to the bakery dough, wherein the icing is capable of coating the bakery dough during heating or baking of the foodstuff to provide a self-iced baked good.
The bakeable icing comprises 8-16 wt.% of a functional whey protein and a sweetener.

### DETAILED DESCRIPTION OF THE INVENTION

Accordingly, one aspect of the invention relates to a parbaked farinaceous product that is at least partly coated with a glaze composition, said glaze composition comprising at least 20 wt.% of fat, wherein said fat is characterised by the following fatty acid composition:
- saturated C₈-C₁₄ fatty acids between 50 wt.% and 80 wt.%;
- saturated C₁₆-C₁₈ fatty acids between 10 wt.% and 35 wt.%;
- total saturated fatty acids between 70 wt.% and 100 wt.%;
   and the following solid fat profile:
- N₃₅ ≤ 25%;
- N₂₀ ≥ 60%;
- N₂₀-N₃₅ ≥ 55%.
   The concentrations of fatty acids as referred to in here, unless indicated otherwise, are calculated on the total amount of fatty acids present in the fat blend.

The expression Cₓ fatty acid refers to a fatty acid with a carbon chain length of x. Unless otherwise indicated, Cₓ refers to a saturated fatty acid with x carbon atoms. Thus, palmitic acid is a C₁₆ fatty acid.

The solid fat profile of the present fat blend and of components used in said fat blend is determined by measuring the N-value at different temperatures. The N value a temperature x °C is referred to in here as Nₓ. These N-values can suitably be measured using the generally accepted analytical method that is based on NMR measurements: Sample pre-treatment involves heating to 60 °C, 5 minutes at 60 °C, 60 minutes at 0 °C and 30 minutes at the measuring temperature.

Throughout this document the terms fat and oil are used interchangeably. Both terms refer to fatty acid glycerol esters such as triglycerides, diglycerides and monoglycerides. According to a preferred embodiment, the terms oil and fat as used herein refer to triglycerides and diglycerides. Most preferably, the terms fat and oil as used herein are synonymous to triglycerides.

As mentioned herein before, the advantageous properties of the present glaze composition are believed to be associated with the use of a fat that contains high levels of saturated C₈-C₁₄ fatty acids. In accordance with a preferred embodiment, the fat in the glaze composition contains at least 55 wt.%, more preferably at least 60 wt.% and most preferably at least 65 wt.% of saturated C₈-C₁₄ fatty acids.

Lauric acid (C₁₂) and myristic acid (C₁₄) advantageously represent a major fraction of the saturated C₈-C₁₄ fatty acids in the fat of the glaze composition. Typically, said fat contains between 50 wt.% and 75 wt.% of saturated C₁₂-C₁₄ fatty acids. Preferably, the fat contains at 54 wt.%, more preferably at least 56 wt.% of saturated C₁₂-C₁₄ fatty acids.

Lauric acid typically represents at least 38 wt.%, more preferably at least 40 wt.% and most preferably at least 42 wt.% of the fat in the glaze composition. The amount of lauric acid contained in said fat preferably does not exceed 60 wt.%, more preferably it does not exceed 55 wt.%.

The fat of the present glaze composition suitably contains a significant amount of palmitic acid (C₁₆). Preferably, the fat contains at least 4 wt.%, more preferably at least 5 wt.% of palmitic acid. Typically, palmitic acid represent no more than 25 wt.%, more preferably no more than 15 wt.% and most preferably no more than 12 wt.% of the fat.

The amount of stearic acid contained in the fat of the present glaze composition preferably exceed 5 wt.%, more preferably 10 wt.% and most preferably it exceeds 15 wt.%. Typically the stearic acid content of the fat does not exceed 35 wt.%, more preferably it does not exceed 25 wt.%, most preferably it does not exceed 22 wt.%.

Saturated fatty acids preferably represent at least 90 wt.%, more preferably at least 95 wt.% and most preferably at least 97 wt.% of the fat in the glaze composition. These very high levels of saturated fatty acids contribute to the bake stability of the present glaze composition and also have favourable impact on the eating quality of the glaze.

According to a particularly preferred embodiment, the fat of the glaze composition contains a small amount of very high melting triglycerides, notably tristearate. Preferably, the fat contains between 0.5 and 8 wt.% of tristearate, even more preferably between 0.5 wt.% and 5.0 wt.% of tristearate. A suitable source of tristearate are fully hydrogenated oils that are rich in C18 fatty acids (e.g. rapeseed oil).

The favourable texture and mouth feel of the glaze produced with the present glaze composition is reflected in the solid fat profile of the fat. Advantageously, the fat in the glaze composition has relatively a low solid fat content at 35 °C (N₃₅). Preferably, the solid fat content N₃₅ does not exceed 20%, more preferably it does not exceed 18%. In addition, N₃₅ preferably is at least 3%, more preferably at least 5% and most preferably at least 7%.

In order for the present glaze composition to yield a glaze with a crispy texture, it is advantageous to employ a fat that has a very high solid fat content at 20 °C (N₂₀). Preferably, the solid fat content N₂₀ is at least 70%, more preferably at least 75%. Furthermore, N₂₀ preferably does not exceed 95%, more preferably it does not exceed 90%.

Because the fat in the glaze composition advantageously has a very high solid fat content at 20 °C and a relatively small solid fat content at 35 °C, said fat needs to be steep melting. The difference between the solid fat content at 20 °C and the solid fat content at 35 °C (N₂₀-N₃₅) provides a good measure of the steepness of the melting curve. According to a particularly preferred embodiment, the fat of the present glaze composition meets the requirement that N₂₀-N₃₅ exceeds 60%, more preferably that it exceeds 65%. Typically, N₂₀-N₃₅ does not exceed 80%..

Besides fat, the present glaze composition may suitably contain a variety of ingredients, such as sugar, cocoa, nuts, emulsifier, protein, colouring and flavour. The glaze composition may also contain very small quantities of water. Preferably, the water content of the glaze composition does not exceed 5 wt.%. According to a particularly preferred embodiment, the glaze composition contains at least 15 wt.%, preferably at least 25 wt.% of sugar. The combination of fat and sugar advantageously represents at least 50 wt.%, preferably at least 65 wt.% of the glaze composition.

According to yet another preferred embodiment, the present glaze composition contains a significant amount of protein, e.g. from 0.5 to 12 wt.% of protein. Even more preferably, the glaze composition contains at least 1.0 wt.%, most preferably at least 3.0 wt.% of protein. The incorporation of protein in the present glaze composition was found to improve the baking stability of the present glaze composition.

The glaze composition usually represents not more than a minor part, e.g. less than 20 wt.% of the present parbaked farinaceous product. Preferably, the glaze composition represents less than 10 wt.% of the parbaked farinaceous product.

The glaze composition is advantageously applied on the outside of the parbaked product as a relatively thin layer. Typically, the coating composition forms a coating layer with an average thickness of 1-5mm.

In accordance with the present invention the glaze composition may be employed to partially or completely coat the parbaked farinaceous product. Preferably, at least 5%, more preferably at least 10% of the surface area of the parbaked product is coated with the glaze composition. Typically, only the topside of the parbaked product is coated with the glaze composition, meaning that not more than 80 wt.%, preferably not more than 65 wt.% of the parbaked product is coated with the glaze composition.

Examples of parbaked farinaceous products that are encompassed by the present invention include parbaked pastry, parbaked croissants and parbaked puff pastry.

The parbaked product of the present invention is advantageously packaged so that it can be shipped or stored without difficulty. The product can suitably be stored under ambient or refrigerated conditions or it may be stored in frozen form. According to a particularly preferred embodiment of the invention, the parbaked farinaceous product is packaged in a bag made of flexible material that is thermostable up to a temperature of at least 180 °C, even more preferably of at least 200 °C, most preferably of at least 220 °C. The use of a thermostable packaging material offers the advantage that the parbaked product can be baked off while it remains in the bag, yielding a baked product that is essentially indistinguishable from a freshly baked product.

Another aspect of the present invention relates to a method of preparing a fully baked farinaceous product said method comprising baking off a parbaked farinaceous product as defined herein before at a temperature of at least 180 °C, preferably of at least 200 °C for at least 30 seconds. Preferably, the method comprises baking off the parbaked product at a temperature of not more than220°C for maximum 3 minutes. Even more preferably, the parbaked product is baked off at a temperature of maximum 200 °C for max. 2 minutes.

A particularly preferred embodiment of the present method comprises baking off the parbaked farinaceous product while it is packaged in a bag made of flexible thermostable material as defined herein before.

Yet another aspect of the present invention relates to a process of preparing a parbaked farinaceous product according to the present invention, said process comprising applying a glaze composition as defined herein before onto the surface of a parbaked farinaceous product. Advantageously, the glaze composition is applied onto the parbaked farinaceous product when said product has a temperature of 15-60 °C.

The invention is further illustrated by means of the following example.

### EXAMPLE

Chocolate glazes were prepared on the basis of the recipes shown in Table 1:

**Table 1**

| | **I** | **II** | **III** | **IV** |
|---|---|---|---|---|
| vegetable fat, hardened | 41 | 41 | | 29 |
| vegetable fat, hardened, interestified | | | 45,5 | |
| coconut oil | | | | 11 |
| Sugar | 47 | 38 | 37 | 28 |
| skimmed cocoa powder | | 9 | 16 | 20 |
| skimmed milk powder | 12 | 12 | 1,5 | |
| Lactose | | | | 10 |
| soy lecithins | 0,5 | 0,5 | 0,5 | 0,5 |
| Flavour | < 0,5 | < 0,5 | < 0,5 | < 0,5 |

The composition and solid fat profile the fats used in the above glaze compositions are depicted in Table 2.

**Table 2**

| | Fat of glazes I + II | Fat of glaze III | Coconut oil | Fat of glaze IV |
|---|---|---|---|---|
| | *Partially hardened palmkernel* + *fully hardened rapeseed oil (40:1)* | *Interesterified, partially hardened palmkernel oil* | | |
| N₂₀ | 81 - 85 | 77 - 81 | 32 - 44 | 66 - 70 |
| N₃₀ | 32-38 | 27-33 | 0 - 3 | 13 - 17 |
| N₃₅ | 10-14 | 1 - 5 | 0 - 2 | 4 - 8 |

The fatty acid composition of the fat used in glazes I and II is shown in Table 3.

**Table 3**

| Fatty acid | Wt.% |
|---|---|
| C8:0 | 4.7 |
| C10:0 | 3.8 |
| C12:0 | 47.4 |
| C14:0 | 15.3 |
| C16:0 | 8.4 |
| Saturated | 99.5 |
| Mono-unsaturated | 0.31 |
| Poly-unsaturated | 0.04 |

The glazes were prepared by heating the fat component to 45-50 °C until the fat was completely molten, followed by the addition of the other ingredients. The mixtures were kept at the aforementioned temperature and stirred to produce a homogeneous blend.

Subsequently, the glazes were applied onto pre-baked croissants that had been cooled down to ambient temperature. Once the glazes had congealed sufficiently, a single croissant was packaged in a bag made of ultra thin film with exceptional heat resistance and controlled water vapour permeability.

The croissants were baked off in the closed bags by introducing these bags for 3 minutes into an air circulation oven that had been pre-heated to 220 °C. Evaluation of the croissants by an expert panel showed that the glazes of products I and II performed very well during baking. More particularly, it was found that these glazes did not burn, form blisters or run off. The glaze of product III was slightly burned and showed some blisters in the areas where the glaze layer was relatively thin. The glaze of product IV was inferior to the other glazes in terms of burn and blister formation.

## Claims

1. A parbaked farinaceous product that is at least partly coated with a glaze composition, said glaze composition comprising at least 20 wt.% of fat, wherein said fat is **characterised by** the following fatty acid composition:
• saturated C₈-C₁₄ fatty acids between 50 wt.% and 80 wt.%;
• saturated C₁₆-C₁₈ fatty acids between 10 wt.% and 35 wt.%;
• total saturated fatty acids between 70 wt.% and 100 wt.%;
and the following solid fat profile:
• N₃₅ ≤ 25%;
• N₂₀ ≥ 60%;
• N₂₀-N₃₅ ≥ 55%.

2. Parbaked farinaceous product according to claim 1, wherein the fat contains between 50 wt.% and 75 wt.% of saturated C₁₂-C₁₄ fatty acids.

3. Parbaked farinaceous product according to claim1 or 2, wherein the fat contains from 4 wt.% to 25 wt.%, preferably from 5 wt.% to 15 wt.% of palmitic acid.

4. Parbaked farinaceous product according to any one of the preceding claims, wherein the fat contains from 5 wt.% to 35 wt.%, preferably from 15 wt.% to 25 wt.% of stearic acid.

5. Parbaked farinaceous product according to any one of the preceding claims, wherein the fat contains at least 90 wt.%, preferably at least 95 wt.% of saturated fatty acids.

6. Parbaked farinaceous product according to any one of the preceding claims, wherein the fat contains less than 8 wt.%, preferably between 0.5 wt.% and 5.0 wt.% of tristearate.

7. Parbaked farinaceous product according to any one of the preceding claims, wherein the fat is **characterised by** the following solid fat profile:
• 3% ≤ N₃₅ ≤ 20%;
• 70% ≤ N₂₀ ≤ 90%; and
• 60% ≤ N₂₀-N₃₅ ≤ 80%.

8. Parbaked farinaceous product according to any one of the preceding claims, wherein the glaze composition contains 0.5-12 wt.%, preferably 3.0-12 wt.% of protein.

9. Parbaked farinaceous product according to any one of the preceding claims, wherein the farinaceous product is selected from the group consisting of parbaked pastry, parbaked croissants and parbaked puff pastry.

10. Parbaked farinaceous product according to any of the preceding claims, wherein the product is packaged in a bag made of flexible material that is thermostable up to a temperature of at least 180 °C, preferably of at least 210 °C.

11. Method of preparing a fully baked farinaceous product said method comprising baking off a parbaked farinaceous product according to any one of the preceding claims at temperature of at least 180 °C for at least 30 seconds.

12. Method according to claim 11, comprising baking off a packaged parbaked farinaceous product as defined in claim 10.

13. A process of preparing a parbaked farinaceous product according to any one of claims 1-10, said process comprising applying a glaze composition as defined in any one of claims 1-8 onto the surface of a parbaked farinaceous product.
